# EUROPEAN PATENT SPECIFICATION

(11) **EP 2 000 020 B1**
(45) Date of publication and mention of the grant of the patent: **17.10.2012**
(21) Application number: 06841764.1
(22) Date of filing: 28.12.2006
(51) Int. Cl.: A01G 13/02, E04D 15/06, E04D 5/06, A01G 9/14, E04B 1/32, E04H 15/36

(54) **MACHINE FOR RENEWING AND REMOVING PLASTICS IN GREENHOUSES**
MASCHINE ZUR ERNEUERUNG UND ENTFERNUNG VON KUNSTSTOFFEN IN GEWÄCHSHÄUSERN
MACHINE SERVANT À POSER ET À ENLEVER DES PLASTIQUES DANS DES SERRES

(30) Priority: 28.02.2006 ES 200600446 U
(43) Date of publication of application: 10.12.2008
(73) Proprietor: Fernandez Fernandez, Josefa, 04000 Balerma, Almeria (ES); Fernandez Pérez, Encarnacion, 04000 Balerma, Almeria (ES)
(72) Inventor: FERNÁNDEZ FERNÁNDEZ, Juan Francisco, 04000 Balerma, Almeria (ES)
(74) Representative: PROPI, S.L.
(86) International application number: PCT/ES2006/000712
(87) International publication number: WO 2007/099179

(56) References cited:
- WO-A1-99/25174
- DE-A1- 1 499 046
- ES-A1- 2 195 685
- ES-U- 277 969
- FR-A1- 2 672 333
- GB-A- 685 457
- JP-A- 8 130 990
- JP-A- 9 313 048
- JP-A- 10 098 947
- JP-A- 10 225 236
- JP-A- 10 262 469
- US-A- 4 318 514
- US-A- 4 771 570

## Description

### OBJECT OF THE INVENTION

The present invention relates to a machine designed to slide between the two metal meshes which stabilize the closure plastic of a greenhouse, in order to eliminate the already existing plastic, in the event that it is necessary to replace it, and also to renew said plastic, replacing it with another new one.

The object of the invention is to permit the aforementioned manoeuvres to be made in an extremely fast and simple way, with the help of a towing vehicle, such as for example an agricultural towing vehicle, which drags said machine along the greenhouse covering.

### BACKGROUND OF THE INVENTION

As is known, the functional basis of a greenhouse is to establish a semitransparent covering, which allows the passage of light which along with the consequent heating of the compartment which closes, furthermore minimizing the loss of said heat, for which plastic sheets are habitually used, of considerable length, which are sold in the form of rolls.

These plastic strips or sheets are mounted on a support structure, generally metal, based on transversal arches or porticos and longitudinal straps duly distributed. Nevertheless, for the plastic to offer a longer operational life, specifically so that it does not rapidly deteriorate due to the effects of the wind, a metal mesh is placed on top of the aforementioned structure, thereupon the plastic, and finally a second metal mesh, so that both metal meshes configure with the plastic sheet a type of sandwich which immobilizes the plastic, preventing the mobility thereof by the wind and, consequently, also preventing that tears thereof occur due to said effect.

The document GB685457 A reveals a cloche forming machine which comprises a chassis with means for supporting a pair of rolls of flexible material, means for paying the material off the rolls as the machine is advanced so that the two sheets of material are deposited on edge on the ground with their lower edges separated and their upper edges close to each other. As shown, reels (18) of material (20) (which may be a plastic sheet incorporating a metallic or plastic grid) are mounted on converging spindles (16) carried by a wheeled chassis (10) and rotatable through gearing by crank (24). When laying a cloche, the material (20) is passed over rollers (22) and the ends are anchored suitably; the machine is then moved backwards while material is payed out and supported at intervals by staples (40). The staples are arranged with one leg inside and one outside the cloche, successive staples being reversed to give a "woven" effect. The cloche may be lifted by reversing the process. The machine may be power driven or drawn by a tractor. When laying a cloche, instead of paying out the material it may be allowed to run freely as the machine is moved.

This solution, completely satisfactory with regard to the results obtained, nevertheless presents important problems when the time comes to replace the plastic sheet, when this is necessary, both because of the difficulty that results from getting rid of the old or expired plastic sheet, and because of the subsequent mounting of the new plastic, since these operations require a large labour force as well as being a very uncomfortable job.

### DESCRIPTION OF THE INVENTION

The machine for renewing and removing plastics in greenhouses proposed by the invention resolves the previously stated problem in a completely satisfactory manner, as it allows for said removal of the plastic, as well as its subsequent substitution by a new one; it can be carried out in a practically automatic manner, with a minimum labour force participation, with very desirable working conditions and also in a quick and safe manner.

To do this, and in a more specific manner, said machine is made up of a frame, flattener, in the form of a sledge, equipped with wheels which permit its easy sliding on the lower metal mesh, frame which also has an upper fork which also gives it a sledge effect with respect to the upper metal mesh, in order to conveniently separate both meshes during the sliding of the frame, ensuring that it is completely impossible for said frame to hook onto one of the wires which form the meshes.

On the front cross members of said frame are established a type of pole for pulling the machine, which by means of a cable of undefined length is connected to a support which, in turn, drives the towing vehicle, although provisions have been made for the incorporation of a motor, of any conventional type, established in the interior of the frame which by means of the corresponding transmission permits the movement of the wheels established on said frame, facilitating the movement thereof.

The abovementioned front cross member of the frame, just as the rest of the cross members which participate therein, are telescopic, with the purpose of regulating the width of the machine at one's discretion, in accordance with different widths of plastic strips, at the same time that its cross members are also telescopic, with the aim of extending the dimensions of the machine.

According to another of the characteristics of the invention, it has been provided that the pulling pole is transversally moveable with respect to the cross member whereon it is mounted, in order to adopt a centred disposal at all times, the fork being connected to said pole in its transversal movement which gives the machine the upper sledge effect, a fork that adopts an arched profile to house thereunder the new plastic roll, and which is articulated in order to adapt to rolls of different diameters, and in order to permit the introduction thereof.

The shaft for the plastic roll is equipped with levelling means at height, to equally adapt to rolls of different diameter.

Finally, and as a complement to the structure disclosed, the frame incorporates frontally and at a medium level of height retractable claws for the elimination of the old plastic, and laterally a pair of telescopic bars finished off equally in hooks, to remove the plastic.

### DESCRIPTION OF THE DRAWINGS

In order to complement the description being made and with the purpose of helping towards a better understanding of the characteristics of the invention, in accordance with a preferred example of embodiment thereof, a set of drawings is attached as an integral part of said description, wherein the following, in an illustrative and non-limitative character, has been represented:
Figure 1.-Shows, according to a schematic representation in perspective, an exploded view of the covering of a greenhouse, whereto the machine of the invention is applicable.
Figure 2.-Shows, according to a schematic representation also in perspective, the machine for renewing and removing plastics in greenhouses which constitutes the object of the present invention.

### PREFERRED EMBODIMENT OF THE INVENTION

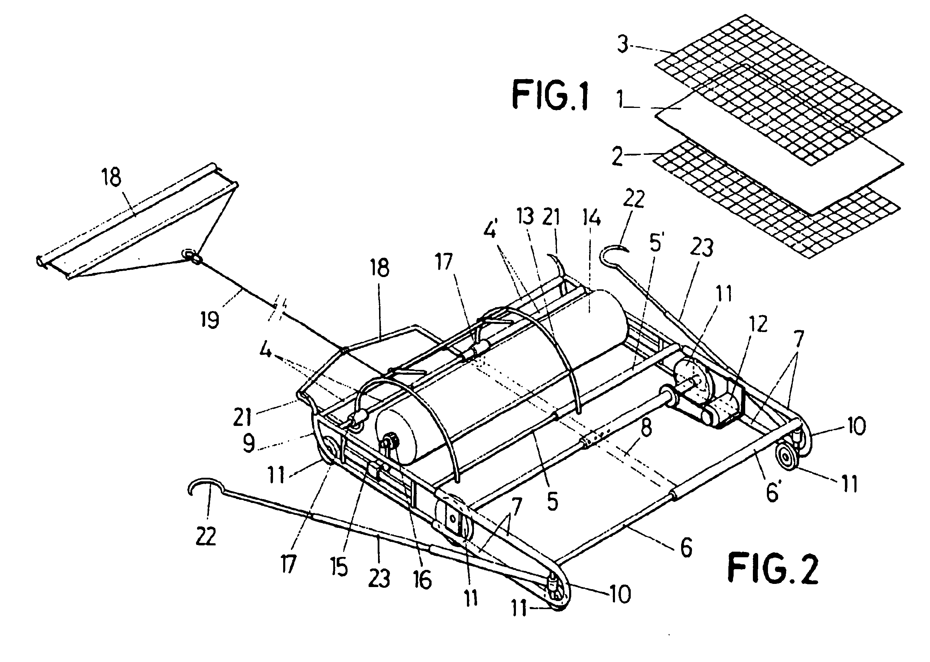

Figure 1, as has just been explained, describes the structure of a covering for a greenhouse, wherein the plastic sheet (1) which gives said covering the greenhouse effect is framed by two metal, wire meshes, one lower (2) and another upper (3), forming a sandwich wherein the wire meshes protect the plastic sheet (1) against the effects of the wind, avoiding an undesired movement thereof. However, the wire meshes (2) and (3) are susceptible to being substantially separated from each other, specifically when the machine of figure 2 passes therebetween.

Said machine is structured by means of a frame wherein a pair of front cross members (4), an intermediate cross member (5) and a rear cross member (6) participate, connected to each other by means of side and double cross members (7) and optionally an intermediate cross member (8). The double side cross members (7) are finished off at their front end in an inclined branch (9), specifically inclined upwards and forwards, which gives the frame a sledge effect for its easy sliding on the wire mesh (2) without risk of hooking by the wires thereof, while its rear end (10) is rounded.

However, it has been provided that said frame incorporates a plurality of wheels (11) arranged internally to the runners determined by the double cross members (7), whose number can be variable, which facilitate the movement of said frame, said wheels (11), or at least two of them being related through the corresponding transmission with a motor (12), which can be either electric or of internal combustion, attached to said frame and disposed internally thereto, whose actuation causes the longitudinal movement of the machine, which will be guided by the tower through the pulling means whereof it disposes.

On the front (4) and intermediate (5) cross members is mounted a fork (13) of convex curved upper profile, which confers on the frame a sledge effect also on an upper level, for a correct sliding on the upper mesh (3) of the covering of the greenhouse.

Furthermore, this curved profile configuration of the fork (13) means that underneath it is established a space for the placement of the roll of plastic, not represented in the figure, mounted on a shaft (14) that in turn is mounted with the possibility of regulating the height on side supports (15) of the frame, with mechanisms (16) for said height regulation.

In order to adapt the machine to coverings or rolls of plastic of different characteristics, both the front cross members (4) and the intermediate (5) and rear (6) ones are telescopic, having complementary and mobile spans (4') and (6'), and the same occurs with the cross members (7), as can be observed in figure 2. Additionally, the fork (13) is mounted in a swinging manner through joints (17) on the front cross member (4) so that it adapts to rolls of plastic of substantially different diameters.

For the guidance in the longitudinal movement of the machine along the covering of the greenhouse, on the front cross member (4-4') is mounted a pole (18), susceptible to moving transversally on the frame in order to adopt a central position at all times, a pole (18) wherefrom emerges a pulling cable (19), of considerable length, which at its opposite end finishes off in a support (20) securable to the pulling means of an agricultural towing vehicle or such like, in charge of pulling the machine.

Lastly, when the machine is replacing plastic, as it advances along the covering it will deposit the extended plastic, coming from the roll mounted on the shaft (14), while when it is removing the old plastic this is carried out by means of a pair of claws (21) situated on the front vertexes of the frame and at medium height, with which collaborate other claws (22) situated on telescopic (23) and side (21) arms, diverging forwards, which facilitates the removal of the plastic.

## Claims

1. Machine for renewing and removing plastics in greenhouses, specifically in greenhouses wherein the plastic sheet is protected by means of two wire meshes, one upper and one lower, wherebetween has to pass said machine both for the replacement and for the elimination of the plastic, said machine is constituted by a substantially level frame, wherein double side members (7) participate which join at their front end forming a plane inclined upwards and forwards, and at their rear end in a rounded manner, providing said frame with a sledge effect on the lower mesh wire (2), whilst, at the top, said frame incorporates a fork (13) of convex curved profile that in turn confers on the frame a sledge effect on the upper wire mesh (3), both double members being spaced apart from one another by means of a plurality of cross members (4-5-6) and said frame incorporating support means for the shaft (14) of the roll of new plastic, and also with claws (21-22) for removing the old plastic, with the special feature that on the front cross member of the frame is established a pole (18) which, through a cable (19) of considerable length finishing off in a support, permits the guiding and pulling of the machine by means of a suitable towing vehicle.

2. Machine for renewing and removing plastics in greenhouses, according to claim 1, **characterised in that** the aforementioned frame includes a series of wheels (1) arranged internally thereto double (7) assisted by a motor (12), of any suitable conventional type, by the corresponding transmission.

3. Machine for renewing and removing plastics in greenhouses, according to previous claims, **characterised in that** the double members (7) of the frame are telescopic, in order to regulate the length of the machine at one's discretion, the cross member (4-5-6) are also telescopic, to equally regulate the width thereof at one's discretion, and both the upper fork (13) and the pole (18) are mounted on the abovementioned cross members with possibility of transversal movement, whilst the aforementioned fork (13) is mounted on the corresponding cross member in articulated manner for its adaptation to any roll of plastic diameter.

4. Machine for renewing and removing plastics in greenhouses, according to previous claims, **characterised in that** on the front end of the frame, in correspondence with its front vertexes and at medium height are established respective claws (21) for removing the plastic, whilst from the rear vertexes emerge a telescopic bar (23) finishing off in turn in other claws (22) to remove the plastic.

## Patentansprüche

1. Maschine zum Erneuern und Entfernen von Kunststoffen in Gewächshäusern, insbesondere in Gewächshäusern, in denen die Kunststofffolien durch zwei Drahtnetze geschützt sind, ein oberes und ein unteres, durch welche die besagte Maschine passieren muss, sowohl zum Austausch als auch zum Beseitigen des Kunststoffes, wobei die besagte Maschine aus einem im Wesentlichen ebenen Rahmen besteht, wobei doppelseitige Glieder (7) partizipieren, mit einer Verbindung an ihrem Vorderende, wobei sie eine Ebene bilden, die nach oben und nach vorne geneigt ist, und an ihrem hinteren Ende in einer abgerundeten Art und Weise, wobei der besagte Rahmen mit einem Schlitteneffekt auf dem unteren Netzdraht (2) ausgestattet ist, während der besagte Rahmen an seinem Kopf eine Gabel (13) mit einem konvexen kurvenförmigen Profil einschließt, welches wiederum dem Rahmen auf dem oberen Netzdraht (3) einen Schlitteneffekt verleiht, wobei beide Doppelglieder durch eine Vielzahl von Kreuzgliedern (4-5-6) voneinander getrennt sind und der besagte Rahmen über eine Stützvorrichtung für den Schaft (14) der Rolle mit dem neuen Kunststoff verfügt, und ebenfalls über Greifer (21-22) zur Entfernung des alten Kunststoffes, mit der besonderen Funktion, dass sich an dem vorderen Kreuzglied des Rahmens ein Pol (18) befindet, der über ein Kabel (19) mit beträchtlicher Länge, welcher in einem Support endet, die Führung und das Ziehen der Maschine mittels eines geeigneten Zugfahrzeuges ermöglicht.

2. Maschine zum Erneuern und Entfernen von Kunststoffen in Gewächshäusern nach Anspruch 1, **dadurch gekennzeichnet, dass** der zuvor erwähnte Rahmen eine Reihe von Rädern (1) einschließt, die intern dazu angeordnet sind, doppelt (7) unterstützt durch einen Motor (12), jeder beliebigen geeigneten herkömmlichen Art, durch das entsprechende Getriebe.

3. Maschine zum Erneuern und Entfernen von Kunststoffen in Gewächshäusern nach den vorhergehenden Ansprüchen, **dadurch gekennzeichnet, dass** die Doppelglieder (7) des Rahmens teleskopisch sind, um die Länge der Maschine beliebig zu ändern, dass die Kreuzglieder (4-5-6) ebenfalls teleskopisch sind, um gleichermaßen die Breite davon beliebig zu ändern, und dass sowohl die obere Gabel (13) als auch der Pol (18) auf den zuvor genannten Kreuzgliedern montiert sind, mit der Möglichkeit einer transversalen Bewegung, während die zuvor genannte Gabel (13) auf dem entsprechenden Kreuzglied gelenkartig für seine Anpassung an jede beliebige Rolle mit Kunststoffdurchmessern montiert ist.

4. Maschine zum Erneuern und Entfernen von Kunststoffen in Gewächshäusern nach den vorhergehenden Ansprüchen, **dadurch gekennzeichnet, dass** am vorderen Ende des Rahmens, in Übereinstimmung mit seinen vorderen Scheitelpunkten und auf mittlerer Höhe, Greifer (21) zum Entfernen des Kunststoffes angebracht sind, während von den hinteren Scheitelpunkten eine teleskopische Stange (23) absteht, die ihrerseits in anderen Greifern (22) zum Entfernen des Kunststoffes endet.

## Revendications

1. Machine pour rénover et retirer des plastiques sur des serres, en particulier sur les serres où la feuille de plastique est protégée au moyen de deux grillages, un supérieur et un inférieur, entre lesquels ladite machine doit passer pour le remplacement comme pour l'élimination du plastique, ladite machine est constituée d'un châssis substantiellement plat, auquel participent des organes à deux côtés (7) lesquels se rejoignent à leur extrémité avant en formant un plan incliné vers le haut et vers l'avant, et à leur extrémité arrière en arrondi, en conférant audit châssis un effet traîneau sur le grillage inférieur (2), alors qu'en haut, ledit châssis comporte une fourche (13) au profile courbe convexe qui à son tour confère au châssis un effet traîneau sur le grillage supérieur (3), les deux organes doubles étant espacés l'un de l'autre au moyen d'une pluralité de traverses (4-5-6) et ledit châssis comportant des moyens de support pour l'axe (14) du rouleau de plastique neuf, et aussi des griffes (21-22) pour retirer l'ancien plastique, avec la caractéristique spéciale tenant au fait que sur la traverse avant du châssis est installé une attache (18) qui, via un câble (19) d'une très grande longueur finissant dans un support, permet de guider et de tirer la machine au moyen d'un véhicule de traction adapté.

2. Machine pour rénover et retirer des plastiques sur des serres, selon la revendication 1, **caractérisée en ce que** le châssis mentionné précédemment comprend une série de roues (1) assemblées à l'intérieur de ce dernier aux doubles (7) assistées d'un moteur (12), de tout type conventionnel adapté, par la transmission correspondante.

3. Machine pour rénover et retirer des plastiques sur des serres, selon les revendications précédentes, **caractérisée en ce que** les organes doubles (7) du châssis sont télescopiques, de façon à régler la longueur de la machine selon ce que l'on souhaite, les traverses (4-5-6) sont télescopiques elles aussi, pour, de la même façon, régler la largeur de cette dernière selon ce que l'on souhaite, et la fourche supérieure (13) et l'attache (18) sont toutes deux montées sur les traverses susmentionnées avec possibilité de mouvement transversal, tandis que la fourche mentionnée précédemment (13) est montée sur la traverse correspondante de façon articulée en vue de son adaptation au diamètre de n'importe quel rouleau de plastique.

4. Machine pour rénover et retirer des plastiques sur des serres, selon les revendications précédentes, **caractérisée en ce que** sur l'extrémité avant du châssis, en correspondance avec ses sommets avant et à mi-hauteur sont installées des griffes respectives (21) pour le retrait du plastique, tandis que des sommets arrière émerge une barre télescopique (23) finissant à son tour dans d'autres griffes (22) pour retirer le plastique.
